Europäisches Patentamt

**European Patent Office**

**Office européen des brevets**

(11) Publication number: **0 461 351 A1**

# EUROPEAN PATENT APPLICATION

(21) Application number: **91104284.4**

(22) Date of filing: **20.03.91**

(51) Int. Cl.⁵: **G11B 33/04, G11B 23/02**

(30) Priority: **11.06.90 US 534243**

(43) Date of publication of application:
**18.12.91 Bulletin 91/51**

(84) Designated Contracting States:
**AT BE CH DE DK ES FR GB GR IT LI LU NL SE**

(71) Applicant: **Smith, Richard D.**
**1942 West Artesia Boulevard**
**Torrance, California 90504(US)**

(72) Inventor: **Smith, Richard D.**
**1942 West Artesia Boulevard**
**Torrance, California 90504(US)**

(74) Representative: **UEXKÜLL & STOLBERG**
**Patentanwälte**
**Beselerstrasse 4**
**W-2000 Hamburg 52(DE)**

(54) **Cabinet for storing a variety of magnetic or optical storage elements.**

(57) A cabinet system for storing a variety of magnetic and optical storage elements includes a cabinet frame and a plurality of drawers. The overall cabinet system comprises two or more individual units or levels which can be stacked together. In one embodiment, the upper level has two layers with two drawer chambers at each layer for holding drawers for audio cassette tapes, the middle level has two layers with two drawer chambers at each layer for holding drawers for video cassette tapes, and the lower level has one layer with two drawer chambers for holding drawers for compact discs. A level for storing computer floppy discs can be further provided, either between the audio cassette level and the video cassette level or elsewhere. The drawers at different levels are specially designed for storing a special kind of magnetic or optical storage elements respectively. The cabinet system of the present invention can be easily manufactured and has an attractive appearance.

fIG. 1.

Rank Xerox (UK) Business Services

## BACKGROUND OF THE INVENTION

The present invention relates to a storage system for storing a variety of magnetic or optical storage elements and particularly to a cabinet for storing audio tapes, video tapes, computer floppy discs and compact discs.

With the widespread and increasing use of recording and playback apparatus in the home, a variety of magnetic or optical storage elements of various dimensions are used. The most common of these magnetic or optical storage elements are audio cassette tapes, video cassette tapes and compact discs. Many families, especially those having teenagers, purchase a large number of cassette tapes or discs. Accordingly, there is a growing need for storage furniture which is an efficient, attractive and inexpensive means of of safekeeping the various magnetic or optical storage elements. In other words, the desired device is both an efficient storage unit and an attractive furniture element.

Various storage devices have been suggested in the prior art, such as by U.S. Patent No. 4,453,785 issued on June 12, 1984 to Richard D. Smith, U.S. Patent No. 4,518,084 issued on May 21, 1985 to Joseph L. Berkman, U.S. Patent No. 4,781,423 issued on November 1, 1988 to Kimberlee K. Muenzer, U.S. Patent No. Des 295,122 issued on April 12, 1988 to Per Madsen, U.S. Patent No. 4,411,481 issued on October 25, 1983 to Joseph L. Berkman, U.S. Patent No. Des. 287,907 issued on January 27, 1987, U.S. Patent No. 4,577,914 issued on March 25, 1986 to David M. Stravitz and U.S. Patent No. 4,312,548 issued on January 26, 1982 to Patrick Posso.

The conventional storage devices, generally speaking, have complicated structures. Some devices or drawers have a function of storing different magnetic storage elements in the same device. However, such devices are complicated to manufacture and expensive, due to the complicated mold and material costs. Further, the devices are normally thicker and occupy a great deal of space. Also, generally in the prior art, storage systems for a particular media are of different width or depth than storage systems for a different media, resulting in a very cluttered and unattractive appearance when the disparate storage systems are combined. Furthermore, most of the prior storage devices do not function as both attractive furniture and an efficient integral storage unit.

The present invention overcomes the shortcomings in the prior devices and provides an attractive, efficient and economic cabinet for storing a variety of magnetic or optical storage elements.

## OBJECT OF THE INVENTION

It is an object of the present invention to provide an integrated cabinet for holding a variety of magnetic or optical storage elements in large quantities which has a simple structure and can be used either in an office or at home.

It is another object of the present invention to provide a cabinet which can separately store different magnetic or optical storage elements in a coordinated fashion and efficiently utilize space.

It is still another object of the present invention to provide a cabinet for holding a variety of magnetic or optical storage elements in large quantities which can be easily and economically manufactured.

It is a further object of the present invention, to provide a cabinet for holding a variety of magnetic or optical storage elements in large quantities which has an attractive appearance and is convenient for use.

These, and still further objects, of the present invention will become apparent hereinafter.

## BRIEF SUMMARY OF THE INVENTION

The present invention utilizes a cabinet which is useful as furniture which stands on the floor, on a shelf, or on other furniture for storing or holding a variety of magnetic or optical storage elements, such as audio cassette tapes or packs, video cassette tapes or packs, compact discs and computer floppy discs.

The cabinet includes a cabinet frame with different drawer chambers for receiving a plurality of drawers and different drawers, each being able to store a plurality of a special kind of magnetic or optical storage elements. The cabinet frame is designed to have Several levels with one or more layers at each level, each layer preferably having two drawer chambers of the same width. The thickness or height of a layer or drawer chamber varies from level to level, based on the size of a special cassette tape or disc so that the space and materials are saved. The drawer chambers at different levels are of the same width so as to provide a symmetrical pattern and make manufacture much easier. Also, the depth or length of the layers or drawers for storage of disparate media are the same despite differences in dimensions of the media to provide an organized attractive appearance. The thickness of a layer at different levels is preferably reduced from top to bottom to make the operation more convenient and appearance more attractive. A drawer includes a rear wall, a pair of composite side walls, a bottom support and a front wall which is much higher or thicker than other walls. The front wall is constructed in a cavity configuration with a bottom opening as an access for fingers to slide the drawer in and out of the drawer chamber. The drawer further includes a plurality of tabs arranged on the bottom support according to the characteristics of different magnetic or optical storage elements and suitable for receiving the maximum amount of a particular one of the various storage media elements. The cabinet frame and drawers can be integrally molded from plastic material.

## BRIEF DESCRIPTION OF THE DRAWINGS

Figure 1 is a perspective view of an embodiment of the cabinet of the present invention for containing a plurality of various magnetic or optical storage elements.

Figure 2 is a perspective view of an embodiment of the drawer for holding a plurality of compact discs in cooperation with the cabinet frame shown in Figure 1.

Figure 3 is a top plan view of the drawer shown in Figure 2.

Figure 4 is a bottom plan view of the drawer shown in Figure 2.

Figure 5 is a side plan view of the drawer shown in Figure 2.

Figure 6 is a perspective view of an embodiment of the drawer for holding a plurality of video cassette tapes or packs in cooperation with the cabinet frame shown in Figure 1.

Figure 7 is a perspective view of the drawer for holding a plurality of audio cassette tapes or packs in cooperation with the cabinet frame shown in Figure 1.

Figure 8 is a bottom plan view of the drawer shown in Figure 7.

Figure 9 is a perspective view of the drawer for holding a plurality of computer floppy discs.

Figure 10 is a top plan view of the drawer shown in Fig. 9.

Figure 11 is a side plan view of the drawer shown in Fig. 9.

Figure 12 is a front plan view of a disc divider used in the drawer shown in Fig. 9.

## DETAILED DESCRIPTION OF THE INVENTION

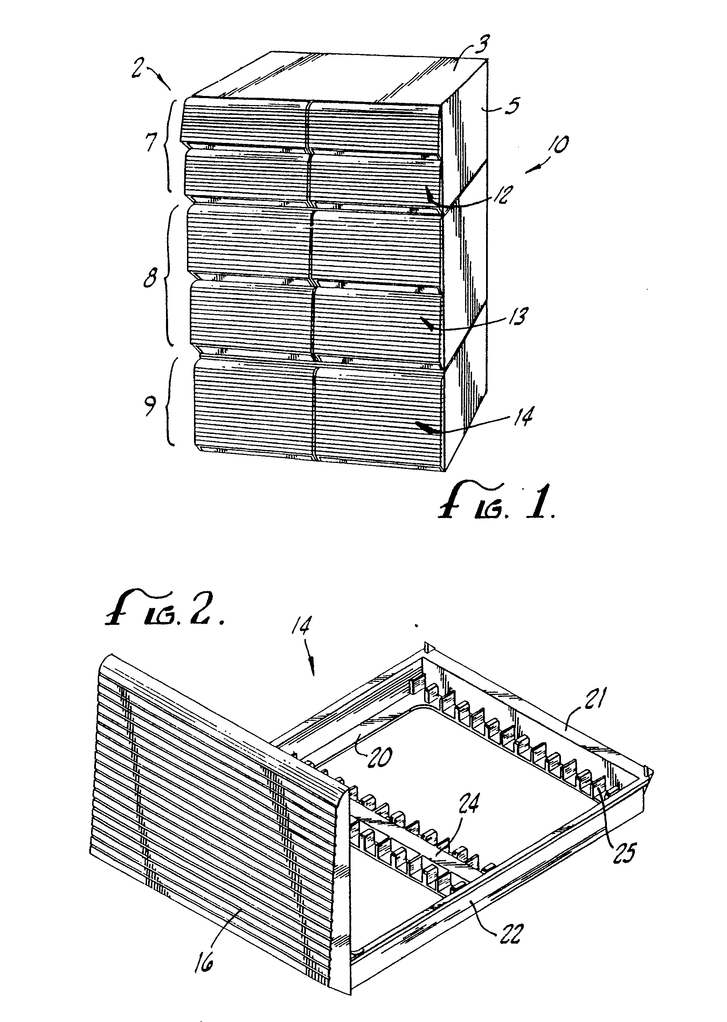

Turning now in detail to the drawings, shown in Figure 1 is an embodiment of a cabinet system 2 of the present invention for storing a variety of magnetic or optical storage elements of various dimensions.

The cabinet system 2 of the present invention utilizes a plurality of levels or individual cabinet units (7, 8, 9) all having the same width and depth, or length, which can be assembled or stacked in any number and in any combination to form an overall multi-level storage system. In the following description a preferred embodiment of a stacked combination of three individual cabinet units is described. However, it should be understood that, instead, two stacked individual units could be provided, or alternatively, four or more. Moreover, it should be understood that the cabinet system may involve a plurality of stacked individual units which are of different configurations for storing different media, or two or more of the individual units may be identical for storing the same particular type of media.

The cabinet 2 includes a cabinet frame 10 and a plurality of drawers 12, 13, 14. The cabinet frame 10 is constructed by a top wall 3, two composite side walls 5, a bottom wall, a rear wall and a plurality of inside horizontal and vertical supporting or locking elements fixed on the inner surfaces of the various walls so that a plurality of drawer chambers are defined to hold the drawers. The drawer chambers are preferably arranged in such a way that three levels, 7, 8, and 9, are formed for holding different drawers 12, 13 and 14, each level having one or two layers. The thickness or height of a drawer chamber or a layer at different levels is preferably reduced from top to bottom for appearance and space-saving reasons. The drawers at different layers have the same width and length to make it easy to manufacture. Each layer at different levels has two drawers so as to provide a symmetrical pattern for the cabinet. Level 7 is specially designed for storing audio cassette tapes or packs in two layers, each of which has the same thickness, level 8 is specially designed for storing video cassette tapes or packs in two layers which have the same thickness, and level 9 is specially designed for storing compact discs in one layer. With this arrangement, withdrawal of different tapes or discs is very convenient and a pleasing appearance is achieved.

In another embodiment, another level can be added for the cabinet system 2 anywhere, but preferably at the top or between the audio cassette level and the video cassette level of the cabinet frame 10 for storing computer floppy discs. This level may include one layer which has two drawer chambers. In accordance with the present invention, each individual cabinet unit or level is separable from the others to provide a more flexible use of the system. Thus, the individual units can be assembled in any number and order desired from the overall storage system.

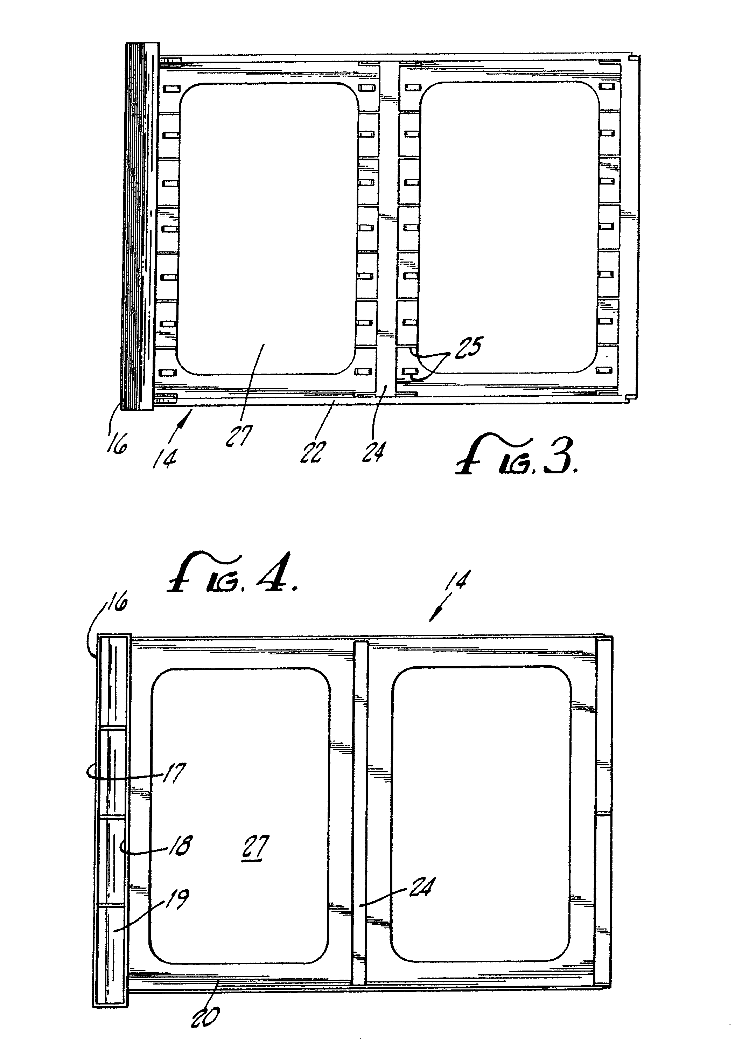

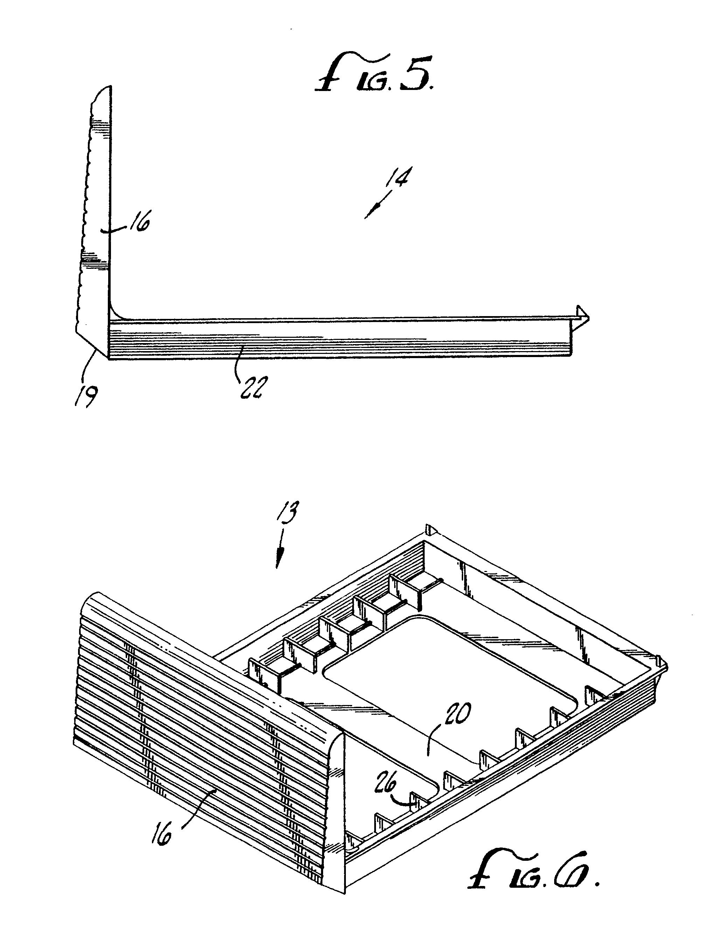

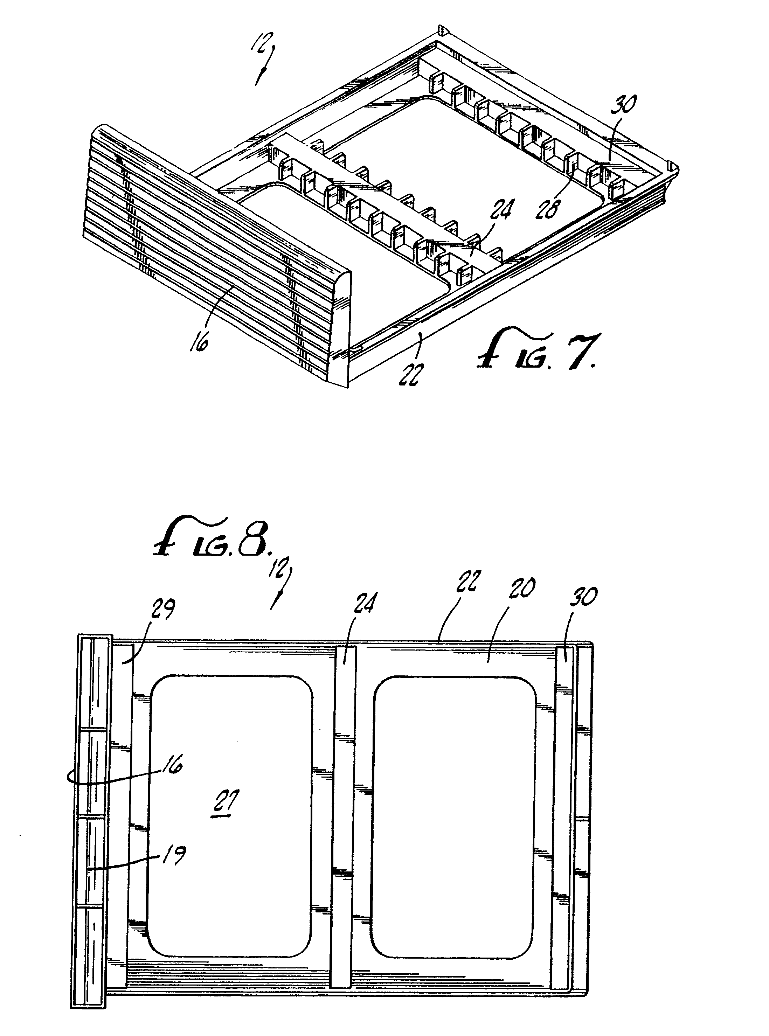

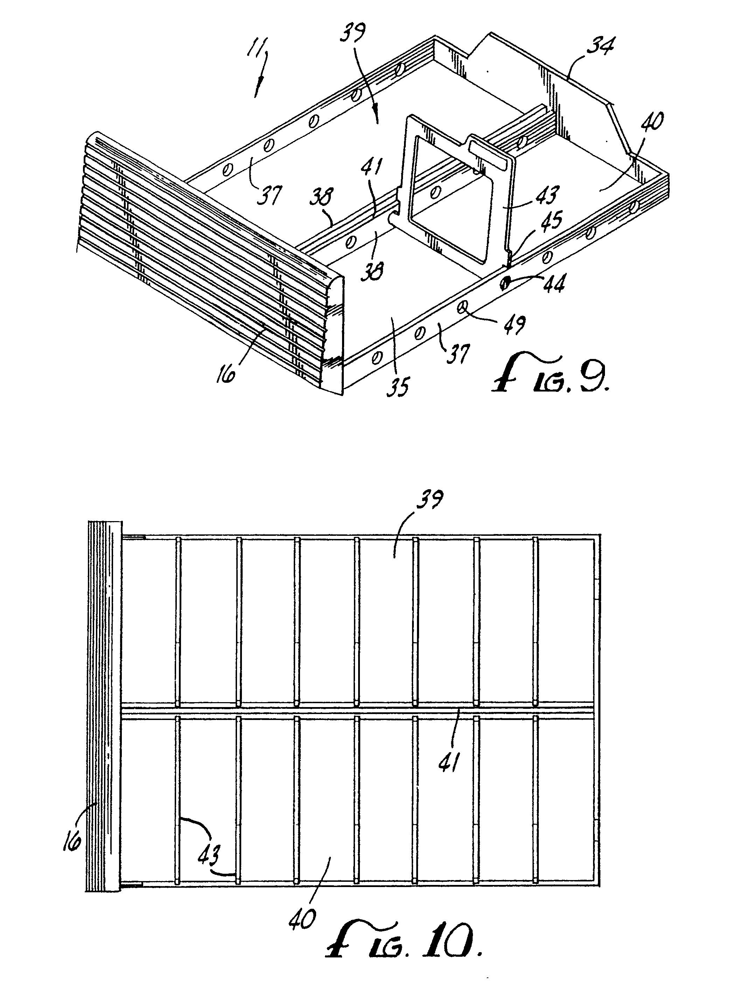

A drawer 14 for containing a plurality of compact discs is shown in Figures 2-5. The drawer 14 is defined by a front wall 16, a rear wall 21, two composite side walls 22 and a bottom support 20. The front wall 16 is substantially higher or thicker than the other walls and is constructed in a cavity configuration having a front panel 17, a rear panel 18 and an opening facing downward at the bottom of the cavity, allowing finger holes to slide the drawer in and out of the drawer chamber. A central transverse rib 24 crossing the bottom support 20 divides the drawer into two equal storage zones. The bottom support 20 includes two apertures 27, respectively, located at each storage zone. A plurality of tabs 25 are spaced apart in four rows and integrally formed on the edges of the bottom support 20 against the rear panel 18 of the front wall 16, the central rib 24 and the rear wall 21. The width of the spaces between the tabs 25 is about the same as the width of a compact disc so that the compact discs can be maintained in the spaces between the tabs in two storage zones.

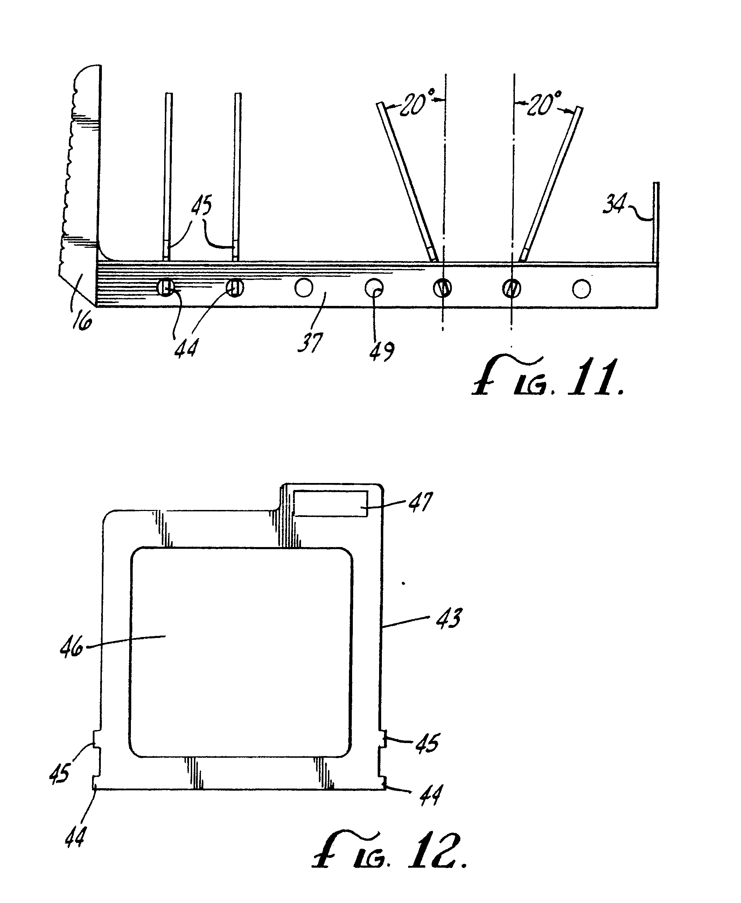

A drawer 13 for storing a plurality of video cassette tapes or packs is illustrated in Figure 6 which has a similar structure to the drawer 14 for storing the compact discs. However, the front wall of the drawer 13 is shorter or thinner than the front wall of the drawer 14. A plurality of tabs 26, of a larger size than the tabs 25 in a drawer 14, are spaced apart in two rows and integrally formed on the edges of the bottom support 20 against the side walls. In the drawer 13, no rib is needed. The width of the spaces between tabs 26 is approximately the same as the width of a video tape or pack so that a plurality of video cassette tapes or packs can be maintained in the spaces between tabs 26.

Figures 7 and 8 show a drawer 12 for storing a plurality of audio cassette tapes or packs which has a similar configuration to drawers 13 and 14. Nevertheless, the front wall is shorter or thinner than the front wall of drawer 13 for containing videocassette tapes. Since the three types of drawers have an equal length, a front transverse rib 29, a central transverse rib 24 and a rear transverse rib 30 are needed in the drawer 12 to form two equal storage zones suitable in size for maintaining audio cassette tapes. A plurality of tabs 28 are spaced apart in four rows and integrally formed on the edges of the bottom support 20 against the ribs 29, 24 and 30. The spaces between the tabs 28 have approximately the same width as the width of an audio cassette tape or pack.

Shown in Figures 9-12 is a preferred embodiment of a drawer 11 for storing a plurality of computer floppy discs 32. A drawer 11 includes a front wall 16, a rear wall 34, a bottom support plate 35, two outer side walls 37 and two inner side walls 38 which isolate the drawer frame into two storage portions 39 and 40. A narrow central gap 41 is provided between the two inner side walls 38 which extends from front wall to rear wall. The front wall 16 and rear wall 34 are substantially higher than the side walls 37 and 38. Structure of the front wall 16 is similar to the structures of other drawers discussed above. A plurality of disc dividers 43 are transversely located in each of the two storage portions 39 and 40 rotatably fastened on the inner and outer side walls through pivot configurations, respectively. On the inner and outer side walls are provided a number of small circular holes 49 which are spaced apart in an equal distance for receiving pivotal convexes 44 integrally formed on the two sides of each of the disc dividers 43 so that the disc dividers are rotatably fastened therein. The disc divider 43 further includes a restriction convex 45 on each side which is positioned a little bit higher than the side walls 37 and 38 so that it can lie on the top edge of the side wall to restrict forward or backward declination of the disc divider within about twenty degrees (20°) with respect to its stand-up position. The distance between two disc dividers may be arranged suitable for containing five to ten floppy discs. The divider 43 further has an central aperture 46 and a small label portion 47 at the top with an about one mm recess on each face for receiving a label identifying the discs.

The overall cabinet system and the varous individual units with which the overall system is assembled as described in the present invention can be integrally molded by using plastic material without use of complicated molds and waste of materials. Since all the individual units, whether for storage of compact discs, audio tapes, video tapes or computer diskettes, are of the same width, length or depth, a visually pleasing and compact overall system results regardless of how many individual units comprise the overall system and regardless of which storage media type those individual units are configured to store.

Various modifications from the preferred embodiments described herein will become apparent to those skilled in the art after reviewing the present disclosure, without departing from the scope thereof.

**Claims**

1. A cabinet system for storing a variety of magnetic storage elements, with each kind having a different size, comprising:

   a cabinet frame comprising a plurality of individual units or levels for separately storing different magnetic or optical storage elements at different levels, each individual unit having the same width and depth dimensions, each individual unit or level including one or more layers of drawer chambers for holding a particular kind of drawer configuration for storing a particular kind of magnetic or optical storage element,

   at least one drawer at each said individual unit or layer for storing magnetic or optical storage elements, each having a bottom supporting member, a rear wall, two side walls and a front wall substantially higher than said rear and side walls, and a plurality of tabs spaced apart from each other and integrally formed on said bottom supporting member in such a way that a particular kind of magnetic or optical storage elements can be efficiently held in the spaces between said tabs.

2. A cabinet system in accordance with claim 1, wherein said cabinet frame includes three individual units or levels, one level for audio cassette tapes, another level for video cassette tapes and still another level for compact discs.

3. A cabinet in accordance with claim 2, wherein said audio cassette level includes two layers of drawers, while said video cassette level also includes two layers of drawers and said compact disc level include one layer of said drawers.

4. A cabinet in accordance with claim 3, wherein each said layer at different levels includes two drawers.

5. A cabinet in accordance with claim 1, wherein said drawers at different levels have the same width.

6. A cabinet system in accordance with claim 1 or 2, wherein said drawer chambers or the front walls of associated drawers for said chambers at different levels have a different thickness or height.

7. A cabinet system in accordance with claim 6, wherein the thickness of a drawer chamber and said front wall of an associated drawer are reduced from the top level to the bottom level, so that audio cassette tapes are stored at the top level, video cassette tapes are stored at the middle level and compact discs are stored at the bottom level.

8. A cabinet system in accordance with claim 1, wherein said front wall of each drawer has a cavity configuration which includes two panels and an opening facing downwardly as an access for fingers.

9. A cabinet system in accordance with claim 3, wherein said plurality of tabs are arranged in such a way that, in an audio cassette drawer and in a compact disc drawer, said tabs are spaced apart in four rows and formed on said supporting member against said front wall or a front rib, said rear wall or a rear rib, and a central rib which divides a drawer into two equal storing zones where cassette tapes or discs are held in spaces between tabs, and in a video cassette drawer, said tabs are spaced apart in two rows and formed on said supporting member against said two side walls for holding cassette tapes in places between tabs.

10. A cabinet system in accordance with claim 1, wherein said supporting member is a supporting plate, including two apertures in order to save material.

11. A cabinet system in accordance with claim 1, wherein said cabinet is integrally molded of plastic material.

12. A cabinet system for storing magnetic or optical storage elements, comprising:

a cabinet frame having at least one individual unit or level, said level including one or more layers of drawer chambers for holding a particular kind of drawer designed for storing computer discs,

at least one drawer at each layer, said drawer for storing floppy discs including a bottom supporting member, a front wall, a rear wall, two outer side walls and two inner side walls which divide said drawer into two storage portions, and a plurality of disc dividing means spaced apart for maintaining a plurality of said discs there-between in each said storage portion, each of which comprises a pair of pivotal convexes rotatably fastened in a pair of pivot holes on said inner and outer side walls, a pair of restriction convexes for restricting the forward and backward declination of said disc dividing means with respect to their stand-up position.

13. A cabinet system in accordance with claim 12; further including at least one additional level for storing one of audio cassette tapes or packs, video cassette tapes or packs, or compact discs.

a plurality of drawers in said additional level, each drawer having a bottom supporting member, a rear wall, two side walls and a front wall substantially higher than said rear and side walls, and a plurality of tabs spaced apart and formed on said supporting member in such a way that a particular kind of magnetic or optical storage element can be efficiently held in the spaces between said tabs.

14. A cabinet system in accordance with claim 13, wherein said additional level includes one or more layers and the thickness of said drawer chambers and front walls of said drawers at different levels are reduced from the top level to the bottom level.

15. A cabinet system in accordance with claim 13, wherein two drawer chambers are provided at each said layer, and drawers at different levels have the same width, so as to provide a symmetrical pattern.

16. A cabinet system in accordance with claim 14, wherein two layers are designed for storing audio tapes and arranged at the top level, one layer is provided below the top level for storing computer discs, two layers are designed for storing video cassette tapes and arranged under the computer disc level, and one layer is designed for storing compact discs and arranged at the bottom level.

17. A cabinet system for storing a variety of magnetic or optical storage elements, comprising:

a cabinet frame formed of at least two individual units or levels, said two individual units being selected from the group consisting of two layers with two drawer chambers at each layer for containing audio cassette tapes, two layers with two drawer chambers at each layer for storing video cassette tapes, one layer with two drawer chambers for storing compact discs, and in which said drawer chambers at each layer have the same width and each of said individual units or levels having the same width and depth and in which two drawers are provided at each said layer, each drawer including a rear wall, two composite side walls, a bottom-supporting plate, a front wall substantially higher or thicker than said rear and side walls and constructed in a cavity form with an opening facing downwardly for the grasping by fingers and a plurality of tabs spaced apart and fixed on said bottom-supporting plate in such a way that a special kind of magnetic or optical storage element can be efficiently held in spaces between said tabs.

18. A cabinet system in accordance with claim 17, wherein said tabs in an audio cassette drawer or in a compact disc drawer are arranged in four rows with the same width between two tabs as the width of an audio tape or pack, or the width of a compact disc, and formed on said supporting member against said front wall or a front rib, said rear wall or a rear rib and a central rib which divides a drawer into two equal storage zones, while said tabs in a video cassette drawer are spaced apart in two rows with the same width between two tabs as the width of a video tape or pack and formed on said supporting plate against said two side walls for holding video tapes in place between tabs.

19. A cabinet system in accordance with claim 17, wherein said bottom supporting plate includes two apertures for saving materials.

20. A cabinet system in accordance with claim 17, wherein said cabinet frame and drawers are integrally made of plastic materials.

21. A cabinet system in accordance with claim 17, further including a level with at least one layer of drawer chambers for holding drawers for computer floppy discs.

22. A cabinet system in accordance with claim 21, wherein said level for computer discs is preferably arranged either at the top of said cabinet frame or between an audio cassette level and a video cassette level.

23. A cabinet system in accordance with claim 21, wherein said drawer for holding computer floppy discs includes a bottom supporting plate, a front wall, a rear wall, two outer side walls and two inner side walls which divide said drawer into two storage portions, and a plurality of disc dividers spaced apart for maintaining the discs there between, each of which comprises a pair of pivotal convexes rotatably fastened in a pair of pivotal holes on said inner and outer side walls, a pair of restriction convexes for restricting the forward and backward declination of said disc divider within a predetermined degree with respect to its stand-up position, and a label portion for labeling the discs.

fig. 1.

fig. 2.

fIG.3.

fIG.4.

FIG.5.

FIG.6.

ƒɪɢ. 7.

ƒɪɢ.8.

fIG. 9.

fIG. 10.

fIG. 11.

fIG. 12.

European Patent
Office

# EUROPEAN SEARCH REPORT

Application Number

| DOCUMENTS CONSIDERED TO BE RELEVANT | | | EP 91104284.4 |

| Category | Citation of document with indication, where appropriate, of relevant passages | Relevant to claim | CLASSIFICATION OF THE APPLICATION (Int. Cl.5) |
|---|---|---|---|
| Y | EP - A1 - 0 092 666 (IDN) * Fig. 3,37; claims 1-8 * | 1,5, 11,12, 17,20 | G 11 B 33/04 G 11 B 23/02 |
| Y | EP - A1 - 0 289 329 (CERTRON CORPORATION) * Fig. 1-3; abstract * | 1,5, 11,12, 17,20 | |
| A | EP - A2 - 0 173 073 (GRÜSKE WERNER) * Fig. 1; abstract * | 1,5, 11,12, 17,20 | |
| | | | TECHNICAL FIELDS SEARCHED (Int. Cl.5) |
| | | | G 11 B 33/00 G 11 B 23/00 A 47 B 81/00 A 47 B 49/00 |

The present search report has been drawn up for all claims

| Place of search | Date of completion of the search | Examiner |
|---|---|---|
| VIENNA | 11-09-1991 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)